# EUROPÄISCHE PATENTSCHRIFT

(11) **EP 0 680 857 B1**
(45) Veröffentlichungstag und Bekanntmachung des Hinweises auf die Patenterteilung: **11.03.1998**
(21) Anmeldenummer: 95106077.1
(22) Anmeldetag: 24.04.1995
(51) Int. Cl.: B60R 22/46, B60R 22/18

(54) **Gasgenerator für ein Fahrzeug-Rückhaltesystem**
Gasgenerator for a vehicle restraint system
Générateur de gaz pour système de retenue dans un véhicule

(30) Priorität: 02.05.1994 DE 4415373
(43) Veröffentlichungstag der Anmeldung: 08.11.1995
(60) Teilanmeldung: 97102576.2
(73) Patentinhaber: TRW Occupant Restraint Systems GmbH, 73553 Alfdorf (DE)
(72) Erfinder: Böhmler, Klaus, D-73525 Schwäbisch Gmünd (DE)
(74) Vertreter: Degwert, Hartmut, Dipl.-Phys.

(56) Entgegenhaltungen:
- EP-A- 0 168 588
- EP-A- 0 560 181
- EP-A- 0 567 113
- EP-A- 0 585 612
- DE-C- 4 234 276

## Beschreibung

Die Erfindung betrifft einen Gasgenerator für ein Fahrzeuginsassen-Rückhaltesystem, mit einem Gehäuse, das eine durch eine Berstmembran verschlossene Öffnung aufweist, einem Zünder und einer Treibmittelaufnahme, in der wenigstens zwei pyrotechnische Treibsätze von verschiedener Verbrennungsgeschwindigkeit vorgesehen sind, die von einer inneren Berstwand voneinander getrennt sind. Ein solcher Gasgenerator gemäß dem Oberbegriff des Patentanspruchs 1 ist aus der EP-A-0 585 612 bekannt.

Ein derartiger Gasgenerator ist insbesondere in Verbindung mit einer Rückstrammeinrichtung eines Sicherheitsgurtsystems verwendbar. Wird der pyrotechnische Treibsatz im Falle eines Fahrzeugaufpralls gezündet, so wird die betreffende Antriebseinheit nach einer Zerstörung der Berstmembran vom durch die Verbrennungsgase erzeugten Druck beaufschlagt. Aufgrund der explosionsartigen Verbrennung des Treibsatzes sind die beweglichen Teile der Antriebseinheit beträchtlichen Beschleunigungskräften ausgesetzt.

Aus der oben genannten EP-A-0 585 612 ist ein Gasgenerator bekannt, in dessen Treibmittelaufnahme ein erster Treibsatz und ein zweiter Treibsatz angeordnet sind, wobei der erste Treibsatz eine geringere Verbrennungsgeschwindigkeit als der zweite Treibsatz hat. Die innere Berstwand ist zwischen dem ersten und dem zweiten Treibsatz angeordnet, und die Berstmembran ist zwischen der Öffnung und dem zweiten Treibsatz angeordnet. Nach Aktivierung des Zünders wird der erste Treibsatz gezündet. Das von diesem erzeugte Druckgas zerstört die Berstwand und zündet den zweiten Treibsatz. Das von diesem erzeugte Druckgas zerstört schließlich die Berstmembran, und das Druckgas kann zum Antrieb beispielsweise eines Gurtsstraffers verwendet werden. Auch bei diesem Gasgenerator steht das Druckgas erst dann zum Antrieb zur Verfügung, wenn bereits der Treibsatz mit der höheren Verbrennungsgeschwindigkeit gezündet wurde. Somit kommt es auch bei diesem Gasgenerator zu einem vergleichsweise steilen Anstieg des erzeugten Gasdrucks.

Der Erfindung liegt die Aufgabe zugrunde, einen Gasgenerator der eingangs angegebenen Art zu schaffen, bei dem die Belastung, der mechanische Bauteile während einer Druckbeaufschlagung der Antriebseinheit des Rückhaltesystems ausgesetzt sind, verringert ist und die Ausnutzung der Generatorleistung verbessert wird.

Diese Aufgabe wird nach der Erfindung dadurch gelöst, daß der Treibsatz geringerer Verbrennungsgeschwindigkeit in einem durch die Berstmembran verschlossenen, vom Zünder beaufschlagten Aufnahmebereich der Treibmittelaufnahme angeordnet ist und daß die Berstwand, die den den Treibsatz höherer Verbrennungsgeschwindigkeit enthaltenden Aufnahmebereich vom durch die Berstmembran verschlossenen Aufnahmebereich trennt, mit zunehmender Verbrennung des Treibsatzes geringerer Verbrennungsgeschwindigkeit zerstörbar ist.

Aufgrund dieser Ausbildung ergibt sich ein geringerer anfänglicher Druckanstieg, wodurch die beweglichen Bauteile der vom Druck beaufschlagten Antriebseinheit zunächst nur geringfügig beschleunigt werden. An diese einen relativ flachen Druckanstieg aufweisende Anfangsphase schließt sich eine Phase mit einem relativ steilen Druckanstieg an, wodurch ein rascher, zuverlässiger Antrieb des Rückhaltesystems gewährleistet ist. Der anfängliche, relativ flache Druckanstieg ist durch die Verbrennungsgase bestimmt, die zunächst beim Abbrennen des Treibsatzes geringerer Verbrennungsgeschwindigkeit entstehen. Die relativ dünne Berstmembran wird praktisch unmittelbar nach dem Zünden des Treibsatzes geringerer Verbrennungsgeschwindigkeit zerstört. Nach deren Zerstörung wird die Antriebseinheit durch die freigegebene Öffnung hindurch zunächst von einem relativ langsam ansteigenden Druck beaufschlagt. Mit zunehmender Verbrennung des für den langsameren Druckanstieg maßgeblichen Treibsatzes geringerer Verbrennungsgeschwindigkeit wird nach einem entsprechenden Druckaufbau auch die Berstwand zerstört, wodurch der Treibsatz höherer Verbrennungsgeschwindigkeit vorzugsweise über den ersten Treibsatz gezündet wird, um in der zweiten Phase die Antriebseinheit mit einem entsprechend schneller ansteigenden Druck zu beaufschlagen. Durch eine entsprechende Wahl der beiden Treibsätze geringerer bzw. höherer Verbrennungsgeschwindigkeit können die Anstiegswinkel des flachen bzw. steilen Druckanstiegs gemäß den jeweiligen Anforderungen festgelegt und der Zeitpunkt des Erreichens des Druckmaximums bestimmt werden. So ist es beispielsweise möglich, trotz der anfänglichen Phase relativ flachen Druckanstiegs das Druckmaximum zu einem relativ frühen Zeitpunkt zu erreichen.

Die Berstwand ist vorzugsweise durch ein sich zwischen dem Zünder und der Berstmembran erstreckendes Innenrohr gebildet, das zweckmäßigerweise so angeordnet ist, daß es am einen Ende vom Zünder beaufschlagt und am anderen Ende durch die Berstmembran verschlossen ist. Demnach wird über den Zünder zunächst nur der Treibsatz geringerer Verbrennungsgeschwindigkeit gezündet. Nachdem die Berstmembran nach erfolgtem Druckaufbau zerstört ist, ist die Verbindung zur Antriebseinheit hergestellt. Diese wird zunächst von einem relativ langsam ansteigenden Druck beaufschlagt. Eine Zündung des Treibsatzes höherer Verbrennungsgeschwindigkeit erfolgt erst, nachdem im Verlauf der Verbrennung des Treibsatzes geringerer Verbrennungsgeschwindigkeit auch das Innenrohr zerstört wurde.

Der Treibsatz geringerer Verbrennungsgeschwindigkeit kann innerhalb des Innenrohres angeordnet sein. In diesem Fall ist dieses Innenrohr vorzugsweise einstückig mit der Treibmittelaufnahme ausgebildet.

Gemäß einer anderen vorteilhaften Ausführungsvariante ist der Treibsatz geringerer Verbrennungsgeschwindigkeit durch das Innenrohr selbst gebildet, das hierzu aus einem Festtreibstoff bestehen kann.

Eine zuverlässige Halterung und Ausrichtung des Innenrohres im Gasgenerator wird dann vorzugsweise dadurch erreicht, daß es mit seinem an die Berstmembran der Treibmittelaufnahme angrenzenden Ende in einen die Berstmembran umgebenden Ringsockel der Treibmittelaufnahme eingesetzt ist, während es mit seinem zünderseitigen Ende zweckmäßigerweise in den Zündkanal des Zünders eingesetzt ist. Auch in diesem Fall wird somit über den Zünder zunächst nur der Treibsatz geringerer Verbrennungsgeschwindigkeit gezündet. Eine Zündung des weiteren Treibsatzes erfolgt erst, nachdem das Innenrohr durchgebrannt ist. Der Ringsockel kann wiederum einstückig mit der Treibmittelaufnahme ausgebildet sein.

In den Unteransprüchen sind weitere vorteilhafte Ausführungsvarianten angegeben.

Weitere Merkmale und Vorteile der Erfindung ergeben sich aus der folgenden Beschreibung und aus der Zeichnung, auf die Bezug genommen wird. In der Zeichnung zeigen:
- Fig. 1: einen Axialschnitt einer ersten Ausführungsform eines pyrotechnischen Gasgenerators mit zwei unterschiedlichen Treibsätzen;
- Fig. 2: einen Axialschnitt einer zweiten Ausführungsform eines pyrotechnischen Gasgenerators mit zwei unterschiedlichen Treibsätzen;
- Fig. 3: ein Druck-Zeit-Diagramm, in dem der Druckverlauf im Zusammenhang mit dem in den Fig. 1 und 2 gezeigten Gasgenerator im Vergleich zu einem herkömmlichen Gasgenerator dargestellt ist.

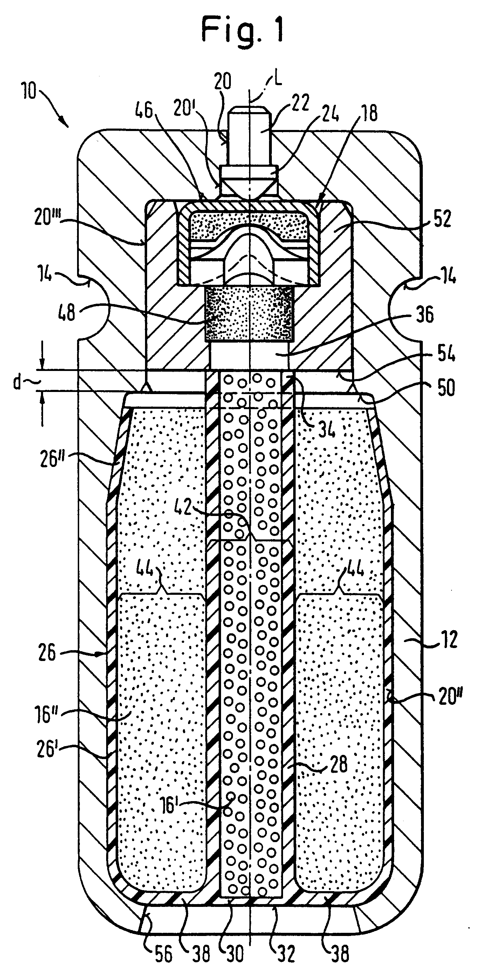

Gemäß der in Fig. 1 dargestellten Ausführungsform besitzt ein pyrotechnischer Gasgenerator 10 ein zylindrisches Gehäuse 12 mit äußeren Aufnahmen 14 für nicht gezeigte Sicherungsstifte oder dergleichen, durch die der Gasgenerator 10 zweckmäßigerweise in einer Bohrung eines Aggregats festgelegt wird, bei dem es sich beispielsweise um die Rückstrammeinrichtung eines Fahrzeug-Sicherheitsgurtsystems handeln kann.

Der Gasgenerator 10 ist mit zwei hinsichtlich ihrer Verbrennungsgeschwindigkeit unterschiedlichen Treibsätzen 16', 16'' und einem Zünder 18 versehen, der beim dargestellten Ausführungsbeispiel ein mechanischer Schlagzünder ist.

Das Gehäuse 12 des Gasgenerators 10 weist gegenüber dem zentralen Bereich einer Aufschlagfläche 46 des Zünders 18 eine gestufte Führungsöffnung 20 auf, in der ein stiftartiges Schlagübertragungselement 22 aufgenommen ist. Dieses Schlagübertragungselement 22 ragt aus der Führungsöffnung 20 heraus, so daß es von einem nicht gezeigten Schlagteil beaufschlagbar ist, das Bestandteil einer beispielsweise mechanischen Auslösevorrichtung ist. Das stiftartige Schlagübertragungselement 22 besitzt einen dem Zünder 18 zugewandten verbreiterten, zum Zünder 18 hin jedoch spitz zulaufenden Kopf 24, der in einer Erweiterung 20' der gestuften Führungsöffnung 20 aufgenommen ist, um das Schlagübertragungselement 22 im Inneren zu sichern. Wird das nicht gezeigte Schlagteil gegen das aus dem Gehäuse 12 herausragende Ende des Schlagübertragungselements 22 getrieben, so dringt die Spitze des Kopfes 24 zentrisch in die Anschlagfläche 46 des Zünders 18 ein, wodurch die Zündung des Gasgenerators 10 erfolgt.

Der Zünder 18 steht über einen einen Booster 48 enthaltenden Zündkanal 36 mit einer in das zylindrische Gehäuse 12 des Gasgenerators 10 eingesetzten Treibmittelaufnahme 26 in Verbindung, die die beiden Haupt-Treibsätze 16', 16'' enthält.

Die napfartige, vorzugsweise aus Kunststoff bestehende Treibmittelaufnahme 26 besitzt einen sich an eine Bodenwand 38 anschließenden längeren zylindrischen Abschnitt 26' und einen kürzeren, sich zum Zünder 18 hin konisch verjüngenden Abschnitt 26''. Der Übergang vom zylindrischen Abschnitt 26' der Treibmittelaufnahme 26 zu deren Bodenwand 38 ist gerundet. Die Treibmittelaufnahme 26 ist vorzugsweise im Preßsitz in einen entsprechend ausgebildeten Abschnitt 20'' der das zylindrische Gehäuse 12 durchdringenden Stufenbohrung eingesetzt. Hierbei besitzt das konisch verjüngte Ende 26'' der Treibmittelaufnahme 26 einen geringfügigen Abstand d zu einer Stufe 50 zwischen dem Abschnitt 20'' größeren Querschnitts und dem Abschnitt 20''' kleineren Querschnitts der das Gehäuse 12 durchdringenden Stufenbohrung, in dem ein den Zünder 18 sowie den Booster 48 enthaltender Einsatz 52 aufgenommen ist. Das vom Zünder 18 abgewandte, der Treibmittelaufnahme 26 zugewandte Ende 54 des Einsatzes 52 ist gegenüber der Stufe 50 ebenfalls zurückgesetzt.

Die Treibmittelaufnahme 26 ist mit einem zentralen, zur dem zylindrischen Gehäuse 12 sowie der Treibmittelaufnahme 26 gemeinsamen Längsachse L koaxialen Innenrohr 28 versehen, das am einen Ende mit seiner Bodenwand 38 verbunden ist und am anderen Ende 34 an den Einsatz 52 angrenzt. Der Innendurchmesser des Innenrohres 28 ist geringfügig kleiner als der Innendurchmesser des koaxialen Zündkanals 36. Dagegen ist der Außendurchmesser des Innenrohres 28 geringfügig größer als der Innendurchmesser des Zündkanals 36, so daß das betreffende Ende des Innenrohres mit einem Teil seines Randes dicht an der die Mündung des Zündkanals 36 enthaltenden Stirnwand 54 des Einsatzes 52 anliegt. Am anderen Ende ist das vorzugsweise einstückig mit der Treibmittelaufnahme 26 ausgebildete Innenrohr 28 mit der zu ihm senkrechten Bodenwand 38 der Treibmittelaufnahme 26 verbunden. Die an diesem Ende vorgesehene Öffnung 32 des Innenrohres 28 ist normalerweise durch eine integral mit der Bodenwand 38 und dem Innenrohr 28 ausgebildete Berstwand 30 verschlossen, die dünner ist als der das Innenrohr 28 sowie die Öffnung 32 umgebende Bereich der Bodenwand 38. Der Übergangsbereich zwischen dem Innenrohr 28 und dem radial äußeren Abschnitt der Bodenwand 38 ist verstärkt ausgebildet.

Am der Berstmembran 30 benachbarten Ende besitzt das zylindrische Gehäuse 12 eine zur Öffnung 32 bzw. zur Berstmembran 30 koaxiale äußere Öffnung 56, die einen größeren Durchmesser als die durch die Berstmembran 30 verschlossene Öffnung 32 des Innenrohres 28 besitzt. Über diese äußere Öffnung 56 ist der Gasgenerator 10 an eine Antriebseinheit eines Fahrzeug-Rückhaltesystems anschließbar, bei dem es sich beispielsweise um eine Rückstrammeinrichtung eines Sicherheitsgurtsystems handeln kann, die beispielsweise sowohl an einem Gurtaufroller als auch an einem Gurtschloß angeordnet sein kann.

Der Treibsatz 16' geringerer Verbrennungsgeschwindigkeit ist innerhalb des Innenrohres 28 und damit in einem zentralen Aufnahmebereich 42 der Treibmittelaufnahme 26 angeordnet. Demgegenüber ist der Treibsatz 16'' höherer Verbrennungsgeschwindigkeit in dem das Innenrohr 28 umgebenden Aufnahmebereich 44 der Treibmittelaufnahme 26 aufgenommen. Demnach ist der den Treibsatz 16'' höherer Verbrennungsgeschwindigkeit enthaltende Aufnahmebereich 42 durch das zentrale, mit seinem zünderseitigen Ende aus der Treibmittelaufnahme 26 heraustretende Innenrohr 28 von dem durch die Berstmembran 30 nach außen abgeschlossenen Aufnahmebereich 42 getrennt.

Wird der Zünder 18 vom Schlagübertragungselement 22 beaufschlagt, so wird über den Booster 48 zunächst der in dem Innenrohr 28 enthaltene Treibsatz 16' geringerer Verbrennungsgeschwindigkeit gezündet. Nach einem ausreichenden Druckaufbau im Inneren des Rohres 28 wird dann die Berstmembran 30 zerstört, wodurch die Öffnung 32 freigelegt wird, über die nun die Antriebseinheit des betreffenden Rückhaltesystems, z.B. eine Rückstrammeinrichtung eines Sicherheitsgurtsystems, beaufschlagbar ist. Während dieser Phase ergibt sich ein relativ flacher Druckanstieg, wodurch die Belastung der mechanischen Bauteile des Rückhaltesystems verringert wird. Mit zunehmender Verbrennung des Treibsatzes 16'' geringerer Verbrennungsgeschwindigkeit wird dann anschließend auch das als Berstwand dienende Innenrohr 28 zerstört, wodurch über den bereits brennenden Treibsatz 16' geringerer Verbrennungsgeschwindigkeit nunmehr auch der Treibsatz 16'' höherer Verbrennungsgeschwindigkeit gezündet wird. Mit dem Abbrennen des Treibsatzes 16'' höherer Verbrennungsgeschwindigkeit ergibt sich ein steilerer Druckanstieg, der einen rascheren Antrieb des Rückhaltesystems zur Folge hat. Durch den anfänglich geringeren Druckanstieg wird die Gefahr einer Beschädigung und/oder einer Beeinträchtigung des Rückhaltesystems auf ein Minimum herabgesetzt.

Durch die Wahl der verschiedenen Treibsätze können die Druckanstiegsgeschwindigkeiten sowie der Zeitpunkt des Erreichens des Maximaldrucks festgelegt werden. Der Zeitpunkt des Übergangs zwischen den beiden verschiedenen Phasen ist unter anderem durch die Dicke und das Material des Innenrohres festlegbar, das vorzugsweise einstückig mit der Treibmittelaufnahme ausgebildet ist und wie dieses vorzugsweise aus Kunststoff besteht.

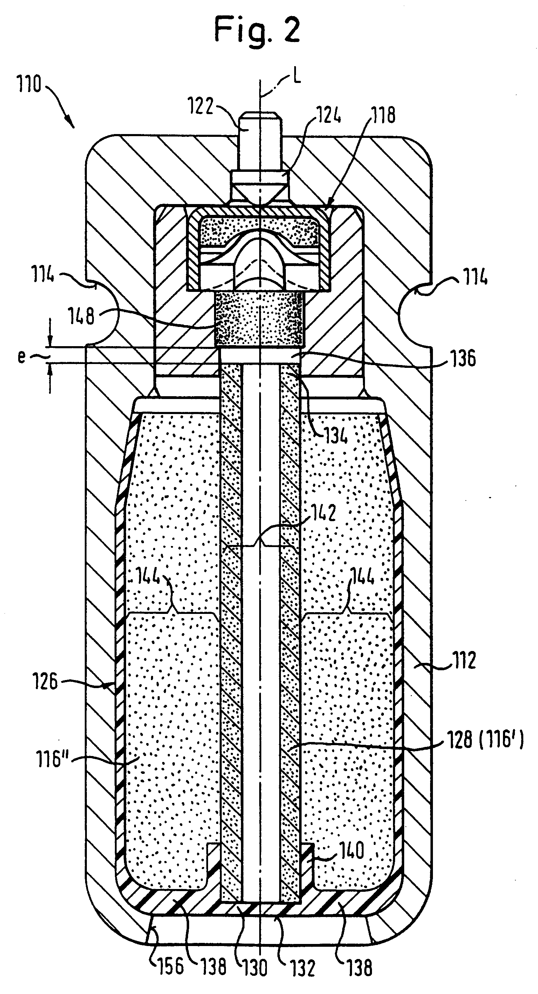

In Fig. 2 ist ein weiteres Ausführungsbeispiel eines pyrotechnischen Gasgenerators mit zwei unterschiedlichen, in einer Treibmittelaufnahme enthaltenen Haupt-Treibsätzen dargestellt. Teile, die denen der Fig. 1 entsprechen, sind mit um 100 erhöhten Bezugszeichen versehen. Es werden lediglich die Unterschiede gegenüber der in Fig. 1 gezeigten Ausführungsform beschrieben.

Bei dieser in Fig. 2 gezeigten Ausführungsform eines pyrotechnischen Gasgenerators 110 ist der Treibsatz 116' geringerer Verbrennungsgeschwindigkeit durch das Innenrohr 128 selbst gebildet. In diesem Fall besteht dieses Innenrohr 128 aus einem Festtreibstoff.

Die Treibmittelaufnahme 126 besteht weiterhin vorzugsweise aus Kunststoff. Sie ist vorzugsweise einstückig mit einem Ringsockel 140 ausgebildet, der sich von der Bodenwand 138 aus nach innen erstreckt und die in der Bodenwand 138 vorgesehene zentrale, normalerweise durch die Berstmembran 130 verschlossene Öffnung 132 umgibt. Der Ringsockel 140 ist zum zylindrischen Gehäuse 112 koaxial und mit dem dem anderen Ende der Treibmittelaufnahme 126 gegenüberliegenden Zündkanal 136 ausgerichtet. Das den Treibsatz 116' geringerer Verbrennungsgeschwindigkeit bildende Innenrohr 128 ist mit seinen beiden Enden in den Ringsockel 140 bzw. den Zündkanal 136 eingesetzt, so daß es koaxial zum zylindrischen Gehäuse 112, der Treibmittelaufnahme 126 und dem Zündkanal 136 des Zünders 118 festgelegt und ausgerichtet ist. Während das in den Ringsockel 140 eingesetzte Ende des Innenrohres 128 unmittelbar an der Berstmembran 130 anliegt und durch diese verschlossen wird, besitzt das in den Zündkanal 136 eingesetzte Ende 134 einen Abstand e zu dem Booster 148, der ebenso wie bei der Ausführungsform der Fig. 1 eine explosionsartige Zündung des Treibsatzes 116' geringerer Verbrennungsgeschwindigkeit bewirkt.

Auch bei dieser Ausführungsform gemäß Fig. 2 wird über den Zünder 118 zunächst nur der Treibsatz 116' geringerer Verbrennungsgeschwindigkeit gezündet, der im vorliegenden Fall duch das Innenrohr 128 selbst gebildet ist. Dieses aus Festtreibstoff bestehende Innenrohr 128 brennt dann relativ langsam durch, so daß während einer ersten Phase der erhaltene Druck wieder relativ langsam ansteigt. Nachdem das Innenrohr 128 durchgebrannt ist, wird auch der Treibsatz 116'' höherer Verbrennungsgeschwindigkeit gezündet, der in der anschließenden Phase einen schnelleren Antrieb des Rückhaltesystems bewirkt. Bei diesem Rückhaltesystem handelt es sich insbesondere wiederum um eine Rückstrammeinrichtung eines Sicherheitsgurtsystems. Eine solche Rückstrammeinrichtung kann beispielsweise wiederum an einem Gurtaufroller oder einem Gurtschloß angeordnet sein.

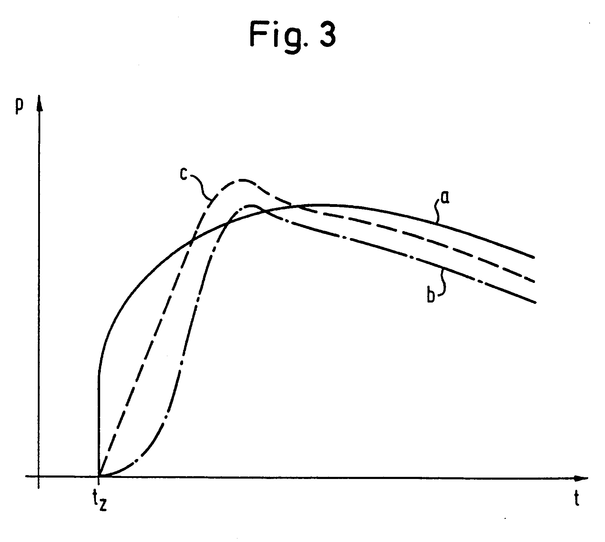

Die Kurve a) in Fig. 3 zeigt den zeitlichen Druckverlauf eines herkömmlichen pyrotechnischen Gasgenerators. Danach ergibt sich unmittelbar nach dem Zündzeitpunkt t_{Z} ein relativ steiler Druckanstieg, an den sich ein Abschnitt anschließt, dessen Steigung bis zum Erreichen des Scheitelwerts kontinuierlich abnimmt. Anschließend wird der Druck p mit zunehmender Zeit t wieder geringer.

Mit der Kurve b) der Fig. 3 ist ein Druckverlauf gezeigt, wie er unter Verwendung eines erfindungsgemäßen pyrotechnischen Gasgenerators erzielbar ist. Danach ergibt sich im Anschluß an den Zündzeitpunkt t_{Z} zunächst ein relativ flacher Druckanstieg. An diese anfängliche Phase mit relativ flachem Druckanstieg schließt sich eine Phase mit einem relativ steilen Druckanstieg an, während der ein rascher Antrieb des betreffenden Rückhaltesystems erfolgt. Nachdem der Scheitelpunkt erreicht ist, nehmen die Druckwerte mit der Zeit wieder ab.

Durch eine entsprechende Auslegung des Gasgenerators ist überdies auch ein solcher Druckverlauf möglich, wie er durch die Kurve c) in Fig. 3 wiedergegeben ist. In diesem Fall wird bis zum Erreichen des Scheitelpunkts ein stetiger Druckanstieg erzielt, der geringer als der anfängliche Druckanstieg bei einem herkömmlichen Gasgenerator (vgl. Kurve a)) und größer als der anfängliche Druckanstieg gemäß der Kurve b) ist. Der Scheitelwert ist größer als bei den beiden vorhergehenden Fällen a) und b).

Durch die Verringerung des Anfangsdrucks werden die Belastungen der mechanischen Bauteile des Rückhaltesystems deutlich verringert, wodurch die Gefahr einer Beschädigung und/oder Beeinträchtigung der vom Druck beaufschlagten Bauteile dieses Rückhaltesystems geringgehalten wird. Der erfindungsgemäße pyrotechnische Gasgenerator ist mit besonderem Vorteil insbesondere in Verbindung mit einer Rückstrammeinrichtung eines Sicherheitsgurtsystems verwendbar, wobei diese Rückstrammeinrichtung insbesondere sowohl an einem Gurtaufroller als auch an einem Gurtschloß angeordnet sein kann.

## Patentansprüche

1. Gasgenerator für ein Fahrzeuginsassen-Rückhaltesystem, mit einem Gehäuse (12; 112), das eine durch eine Berstmembran (30; 130) verschlossene Öffnung (56; 156) aufweist, einem Zünder (18; 118) und einer Treibmittelaufnahme (26; 126), in der wenigstens zwei pyrotechnische Treibsätze (16', 116'; 16'', 116'') von verschiedener Verbrennungsgeschwindigkeit vorgesehen sind, die von einer inneren Berstwand (28; 128) voneinander getrennt sind, dadurch gekennzeichnet, daß der Treibsatz (16'; 116') geringerer Verbrennungsgeschwindigkeit in einem durch die Berstmembran (30; 130) verschlossenen, vom Zünder (18; 118) beaufschlagten Aufnahmebereich (42; 142) der Treibmittelaufnahme (26; 126) angeordnet ist und daß die innere Berstwand (28; 128), die den den Treibsatz (16''; 116'') höherer Verbrennungsgeschwindigkeit enthaltenden Aufnahmebereich (42; 142) vom durch die Berstmembran (30; 130) verschlossenen Aufnahmebereich (42; 142) trennt, mit zunehmender Verbrennung des Treibsatzes (16'; 116') geringerer Verbrennungsgeschwindigkeit zerstörbar ist.

2. Gasgenerator nach Anspruch 1, dadurch gekennzeichnet, daß die innere Berstwand (28, 128) durch ein sich zwischen dem Zünder (18; 118) und der Berstmembran (30; 130) erstreckendes Innenrohr (28; 128) gebildet ist.

3. Gasgenerator nach Anspruch 1 oder 2, dadurch gekennzeichnet, daß das Innenrohr (28; 128) am einen Ende vom Zünder (18; 118) beaufschlagt und am anderen Ende durch die Berstmembran (30; 130) verschlossen ist.

4. Gasgenerator nach Anspruch 3, dadurch gekennzeichnet, daß der Zünder (18; 118) mit einem Zündkanal (36; 136) versehen ist und daß das Innenrohr (28; 128) mit dem Zündkanal (36; 136) in Verbindung steht.

5. Gasgenerator nach einem der Ansprüche 2 bis 4, dadurch gekennzeichnet, daß er ein die Treibmittelaufnahme (26; 126) enthaltendes zylindrisches Gehäuse (12; 112) besitzt, zu dem das Innenrohr (28; 128) koaxial ist.

6. Gasgenerator nach einem der Ansprüche 2 bis 5, dadurch gekennzeichnet, daß der Treibsatz (16') geringerer Verbrennungsgeschwindigkeit innerhalb des Innenrohres (28) angeordnet ist.

7. Gasgenerator nach Anspruch 6, dadurch gekennzeichnet, daß das Innenrohr (28) einstückig mit der Treibmittelaufnahme (26) ausgebildet ist.

8. Gasgenerator nach einem der Ansprüche 2 bis 5, dadurch gekennzeichnet, daß der Treibsatz (116') geringerer Verbrennungsgeschwindigkeit durch das Innenrohr (128) selbst gebildet ist, das hierzu aus einem Festtreibstoff besteht.

9. Gasgenerator nach Anspruch 8, dadurch gekennzeichnet, daß das Innenrohr (128) mit seinem an die Berstmembran (130) der Treibmittelaufnahme (126) angrenzenden Ende in einen die Berstmembran (130) umgebenden Ringsockel (140) der Treibmittelaufnahme (126) eingesetzt ist.

10. Gasgenerator nach Anspruch 8 oder 9, dadurch gekennzeichnet, daß das Innenrohr (128) mit seinem zünderseitigen Ende in den Zündkanal (136) des Zünders (128) eingesetzt ist.

11. Gasgenerator nach einem der vorhergehenden Ansprüche, dadurch gekennzeichnet, daß er ein zylindrisches Gehäuse (12; 112) besitzt, in dem der Zünder (18; 118) und die Treibmittelaufnahme (16; 116) koaxial zur Längsachse des Gehäuses (12; 112) hintereinander angeordnet sind.

12. Gasgenerator nach Anspruch 11, dadurch gekennzeichnet, daß die Öffnung (32; 132) zur Längsachse (L) des Gehäuses (12; 112) koaxial ist.

13. Gasgenerator nach einem der vorhergehenden Ansprüche, dadurch gekennzeichnet, daß die Treibmittelaufnahme (26; 126) als im Gehäuse (12; 112) aufgenommener Einsatz ausgebildet ist.

14. Gasgenerator nach einem der vorhergehenden Ansprüche, dadurch gekennzeichnet, daß die Treibmittelaufnahme (26; 126) aus Kunststoff besteht.

15. Gasgenerator nach einem der vorhergehenden Ansprüche, dadurch gekennzeichnet, daß die Antriebseinheit einer Rückstrammeinrichtung eines Sicherheitsgurtsystems zugeordnet ist.

## Claims

1. A gas generator for a vehicle occupant restraint system comprising a housing (12; 112) with an opening (56; 156) closed by a bursting diaphragm (30; 130), an ignitor (18; 118) and a propellant receiving means (26; 126), in which at least two pyrotechnical propelling charges (16', 116'; 16'', 116'') with differing rate of combustion are provided which are separated from each other by an inner bursting wall (28; 128), characterized in that the propellant charge (16'; 116') with the lower rate of combustion is arranged in a receiving portion (42; 142) of the propellant receiving means (26; 126), said receiving portion (42; 142) being closed by the bursting diaphragm (30; 130) and being adapted to be acted upon by the ignitor (18; 118), and that the inner bursting wall (28; 128), which separates the receiving part (42; 142) containing the propellant charge (16''; 116'') with the higher rate of combustion from the receiving part (42; 142) closed by the bursting diaphragm (30; 130), is destructible with increasing combustion of the propellant charge (16'; 116') with the lower rate of combustion.

2. The gas generator as claimed in claim 1, characterized in that the inner bursting wall (28, 128) is constituted by an internal tube (28; 128) extending between the ignitor (18; 118) and the bursting diaphragm (30; 130).

3. The gas generator as claimed in claim 1 or in claim 2, characterized in that one end of the internal tube (28; 128) is acted upon by the ignitor (18; 118) and the other end thereof is closed by the bursting diaphragm (30; 130).

4. The gas generator as claimed in claim 3, characterized in that the ignitor (18; 118) is provided with an ignition channel (36; 136) and in that the internal tube (28; 128) communicates with the ignition channel (36; 136).

5. The gas generator as claimed in any of claims 2 to 4, characterized in that it has a cylindrical housing (12; 112) containing the propellant receiving means (26; 126), which housing is coaxial in relation to the internal tube (28; 128).

6. The gas generator as claimed in any of claims 2 to 5, characterized in that the propellant charge (16') with the lower rated of combustion is arranged inside the internal tube (28).

7. The gas generator as claimed in claim 6, characterized in that the internal tube (28) is integrally formed with the propellant receiving means (26).

8. The gas generator as claimed in any of claims 2 to 5, characterized in that the propellant charge (116') with the lower rate of combustion is constituted by the internal tube (128) itself, which for this purpose consists of a solid propellant.

9. The gas generator as claimed in claim 8, characterized in that the internal tube (128) has its end adjacent the bursting diaphragm (130) of the propellant receiving means (126) inserted into an annular base (140) of the propellant receiving means (126), which annular base surrounds the bursting diaphragm (130).

10. The gas generator as claimed in claim 8 or in claim 9, characterized in that the internal tube (128) has an end on the side of the ignitor and is inserted with this end in the ignition channel (136) of the ignitor (128).

11. The gas generator as claimed in any of the preceding claims, characterized in that it has a cylindrical housing (12; 112) in which the ignitor (18; 118) and the propellant receiving means (16; 116) are arranged in tandem coaxially to the longitudinal axis of the housing (12; 112).

12. The gas generator as claimed in claim 11, characterized in that the aperture (32; 132) is coaxial with the longitudinal axis (L) of the housing (12; 112).

13. The gas generator as claimed in any of the preceding claims, characterized in that the propellant receiving means (26; 126) is designed in the form of an insert accommodated in the housing (12; 112).

14. The gas generator as claimed in any of the preceding claims, characterized in that the propellant receiving means (26; 126) consists of plastic material.

15. The gas generator as claimed in any of the preceding claims, characterized in that the drive unit is associated with a pretensioner of a safety belt system.

## Revendications

1. Générateur de gaz pour un système de retenue des occupants d'un véhicule, avec un boîtier (12; 112), qui présente une ouverture (56; 156) fermée par une membrane d'éclatement (30; 130), avec un détonateur (18; 118) et un réceptacle pour un agent de propulsion (26; 126), dans lequel on prévoit au moins deux blocs pyrotechniques de propulsion (16'; 116'; 16''; 116''), qui ont des vitesses de combustion différentes et qui sont séparés l'un de l'autre par une paroi intérieure d'éclatement (28; 128), caractérisé en ce que le bloc de propulsion (16'; 116') qui développe une vitesse de combustion plus faible est disposé dans une zone (42; 142) du réceptacle pour l'agent de propulsion (26; 126), qui est fermée par la membrane d'éclatement (30; 130) et est actionnée par le détonateur 18; 118), et en ce que la paroi intérieure d'éclatement (28; 128), qui sépare la zone du réceptacle (42; 142), contenant le bloc de propulsion (16''; 116'') qui développe une vitesse de combustion plus élevée, de la zone du réceptacle (42; 142), fermée par la membrane d'éclatement (30; 130), peut être détruite par une combustion croissante du bloc de propulsion (16'; 116') qui développe la vitesse de combustion la plus faible.

2. Générateur de gaz selon la revendication 1 ou 2, caractérisé en ce que la paroi intérieure d'éclatement (28; 128) est formée par un tube intérieur (28; 128), qui s'étend entre le détonateur (18; 118) et la membrane d'éclatement (30; 130).

3. Générateur de gaz selon la revendication 1 ou 2, caractérisé en ce que le tube intérieur (28;128) est sollicité à une extrémité par le détonateur (18;118) et est fermé à l'autre extrémité par la membrane d'éclatement (30;130).

4. Générateur de gaz selon la revendication 3, caractérisé en ce que le détonateur (18;118) est pourvu d'un canal d'allumage (36;136) et en ce que le tube intérieur (28;128) est en liaison avec le canal d'allumage (36;136).

5. Générateur de gaz selon les revendications 2 à 4, caractérisé en ce qu'il possède un boîtier (12;112) cylindrique, qui contient le réceptacle pour l'agent de propulsion (26;126), boîtier auquel le tube intérieur (28;128) est coaxial.

6. Générateur de gaz selon l'une des revendications 2 à 5, caractérisé en ce que le bloc de propulsion (16'), de vitesse de combustion plus faible, est disposé à l'intérieur du tube intérieur (28).

7. Générateur de gaz selon la revendication 6, caractérisé en ce que le tube intérieur (28) est constitué d'une seule pièce avec le réceptacle (26) pour l'agent de propulsion.

8. Générateur de gaz selon l'une des revendications 2 à 5, caractérisé en ce que le bloc de propulsion (116'), de vitesse de combustion plus faible, est formé par le tube intérieur lui-même (128), qui consiste pour cela en un combustible solide.

9. Générateur de gaz selon la revendication 8, caractérisé en ce que le tube intérieur (128) est inséré, par son extrémité adjacente à la membrane d'éclatement (130) du réceptacle (126) pour l'agent de propulsion, dans un socle annulaire (140), du réceptacle (126) pour l'agent de propulsion, socle annulaire qui entoure la membrane d'éclatement (130).

10. Générateur de gaz selon la revendication 8 ou 9, caractérisé en ce que le tube intérieur (128) est inséré, par son extrémité située du côté du détonateur, dans le canal d'allumage (136) du détonateur (128).

11. Générateur de gaz selon l'une des revendications précédentes, caractérisé en ce qu'il possède un boîtier cylindrique (12; 112), dans lequel sont disposés l'un derrière l'autre le détonateur (18; 118) et le réceptacle pour l'agent de propulsion (16; 116) de façon coaxiale par rapport à l'axe longitudinal du boîtier (12; 112).

12. Générateur de gaz selon la revendication 11, caractérisé en ce que l'ouverture (32; 132) est disposée coaxialement par rapport à l'axe longitudinal (L) du boîtier (12; 112).

13. Générateur de gaz selon l'une des revendications précédentes, caractérisé en ce que le réceptacle pour l'agent de propulsion (26; 126) est constitué sous la forme d'un insert reçu dans le boîtier (12; 112).

14. Générateur de gaz selon l'une des revendications précédentes, caractérisé en ce que le réceptacle pour l'agent de propulsion (26; 126) est réalisé en matière plastique.

15. Générateur de gaz selon l'une des revendications précédentes, caractérisé en ce que l'unité d'entraînement est associée à un dispositif de rétraction d'un système de ceinture de sécurité.
